# EUROPÄISCHE PATENTSCHRIFT

(11) **EP 2 791 481 B1**
(45) Veröffentlichungstag und Bekanntmachung des Hinweises auf die Patenterteilung: **10.08.2016**
(21) Anmeldenummer: 12798707.1
(22) Anmeldetag: 06.12.2012
(51) Int. Cl.: F01N 3/20

(54) **DOSIERANORDNUNG FÜR EIN FLÜSSIGES ABGASNACHBEHANDLUNGSMITTEL UND DOSIERVERFAHREN**
METERING ARRANGEMENT FOR A LIQUID EXHAUST-GAS AFTERTREATMENT MEDIUM AND METERING METHOD
SYSTÈME DE DOSAGE POUR UN PRODUIT LIQUIDE DE RETRAITEMENT DES GAZ D'ÉCHAPPEMENT ET PROCÉDÉ DE DOSAGE

(30) Priorität: 12.12.2011 DE 102011088217
(43) Veröffentlichungstag der Anmeldung: 22.10.2014
(73) Patentinhaber: Robert Bosch GmbH, 70442 Stuttgart (DE)
(72) Erfinder: GOTTWALD, Frank, 71287 Weissach (DE)
(86) Internationale Anmeldenummer: PCT/EP2012/074589
(87) Internationale Veröffentlichungsnummer: WO 2013/087492

(56) Entgegenhaltungen:
- DE-A1-102008 000 594
- US-A1- 2010 242 439

## Beschreibung

### Stand der Technik

Die Erfindung geht aus von einer Dosieranordnung bzw. einem Dosierverfahren nach der Gattung der unabhängigen Ansprüche.

Bei selbstzündenden Brennkraftmaschinen ist zur Erfüllung der Umweltauflagen häufig ein SCR-Katalysator in der Abgasanlage vorgesehen. Damit der SCR-Katalysator die im Abgas enthaltenen NOx-Verbindungen in Wasser und Luftstickstoff umwandeln kann, wird stromaufwärts des SCR-Katalysators ein Abgasnachbehandlungsmittel, beispielsweise eine als Reduktionsmittel dienende flüssige Harnstoff-Wasser-Lösung in den Abgasstrang eingespritzt. Zu diesem Zweck wird beispielsweise ein Dosiersystem umfassend einen Reduktionsmitteltank, eine Reduktionsmittelpumpe und ein Dosiermodul, das ähnlich wie der Injektor einer Kraftstoffeinspritzanlage arbeitet, eingesetzt. Die Pumpe und zugeordnete Komponenten werden auch als Fördermodul bezeichnet.

Aufgabe des Fördermoduls bzw. der Pumpe ist es, Harnstoff-Wasser-Lösung aus dem Tank anzusaugen und auf der Druckseite einen ausreichenden Druck aufzubauen, so dass die flüssige Harnstoff-Wasser-Lösung fein zerstäubt wird, sobald das Dosiermodul bedarfsgesteuert öffnet und das Abgasnachbehandlun gsmittel insbesondere nachmotorisch der Abgasanlage zuführt. Der Injektor ist ebenso wie das Fördermodul mit einem Steuergerät der Brennkraftmaschine verbunden und wird von diesem dem Bedarf entsprechend geöffnet und wieder geschlossen. Entsprechendes gilt auch für den Betrieb der Förderpumpe. Da Harnstoff-Wasser-Lösung die Eigenschaft hat, bei niedrigen Temperaturen einzufrieren und dabei sein Volumen um etwa 11 % zu vergrößern, müssen Maßnahmen getroffen werden, um Schäden an dem Dosiersystem durch gefrierende Harnstoff-Wasser-Lösung zu verhindern.

Zu diesem Zweck ist aus der EP1812144 bekannt, Harnstoff-Wasser-Lösung führende Leitungen zu belüften. Dazu ist die Pumpe mit einer umkehrbaren Förderrichtung ausgebildet bzw. es ist ein Ventil zur Umkehr der Förderrichtung der Pumpe vorgesehen. Es ist hier wie auch in der nachveröffentlichten DE102011081628 beschrieben, dass optional eine zweite Pumpe vorgesehen sein kann, um die Harnstofflösung aus dem Bereich der Förderleitung herauszupumpen.

Auch aus der DE102009029408 ist es bekannt, in das Dosiersystem ein 4/2 Wegeventil zu integrieren. In einer ersten Schaltstellung des 4/2-Wegeventils fördert die Pumpe Reduktionsmittel von dem Tank zum Dosiermodul. Wenn die Brennkraftmaschine abgestellt werden soll, wird das 4/2-Wegeventil in die zweite Schaltstellung gebracht, so dass die Pumpe des Fördermoduls flüssiges Reduktionsmittel von dem Dosiermodul in den Tank fördert und dadurch Teile des Dosiersystems belüftet. Dies setzt voraus, dass das Dosiermodul geöffnet ist und Luft bzw. Abgas aus dem Abgastrakt in das Dosiersystem nachströmen kann.

Durch das teilweise Belüften des Dosiersystems entsteht eine kompressible Luftblase, so dass, wenn die verbleibenden Reste des Reduktionsmittels im Dosiersystem gefrieren, der daraus resultierende Eisdruck so gering ist, dass keine Schäden am Dosiersystem auftreten. Ein solches 4/2-Wegeventil ist allerdings störungsanfällig und teuer.

Die DE 10 2008 000 594 offenbart eine Reduktionsmittelvorrichtung mit einer Vorrichtung zur Rückführung von Reduktionsmittel unter Einsatz eines mechanischen Energiespeichers.

Die US 2010/0242439 beschreibt eine Reduktionsmittelvorrichtung mit einer mit einem Umschaltventil gekoppelten Förderpumpe.

### Offenbarung der Erfindung

Die erfindungsgemäße Dosieranordnung bzw. das erfindungsgemäße Verfahren zum Dosieren eines Abgasnachbehandlungsmittels mit den kennzeichnenden

Merkmalen der unabhängigen Ansprüche haben demgegenüber den Vorteil, dass eine kostengünstige und zuverlässige Entleerung des Dosiersystems nach dem Abschalten der Brennkraftmaschine gewährleistet wird. Weil die Rücksaugpumpe lediglich dazu dient, das Dosiersystem zu belüften bzw. zu entleeren, ist eine geringe Förderleistung ausreichend. Auch werden nur geringe Anforderungen an den Förderdruck der Rücksaugpumpe gestellt. Dies führt dazu, dass die erfindungsgemäße Rücksaugpumpe kostengünstiger ist als ein 4/2-Wegeventil. Außerdem ist eine solche Pumpe weniger störungsanfällig als ein schaltbares 4/2-Wegeventil.

Durch die in den abhängigen Ansprüchen aufgeführten Maßnahmen sind vorteilhafte Weiterbildungen und Verbesserungen der in den unabhängigen Ansprüchen angegebenen Dosieranordnung bzw. des angegebenen Verfahrens möglich.

### Kurze Beschreibung der Zeichnungen

Ausführungsbeispiele der Erfindung sind in der Zeichnung dargestellt und in der nachfolgenden Beschreibung näher erläutert.

Es zeigen
- Figur 1: eine Dosieranordnung mit einer Rücksaugpumpe, die über eine Rücklaufleitung entleert, und
- Figur 2: eine Dosieranordnung mit einer Rücksaugpumpe, die über eine Saugleitung entleert.

### Ausführungsformen der Erfindung

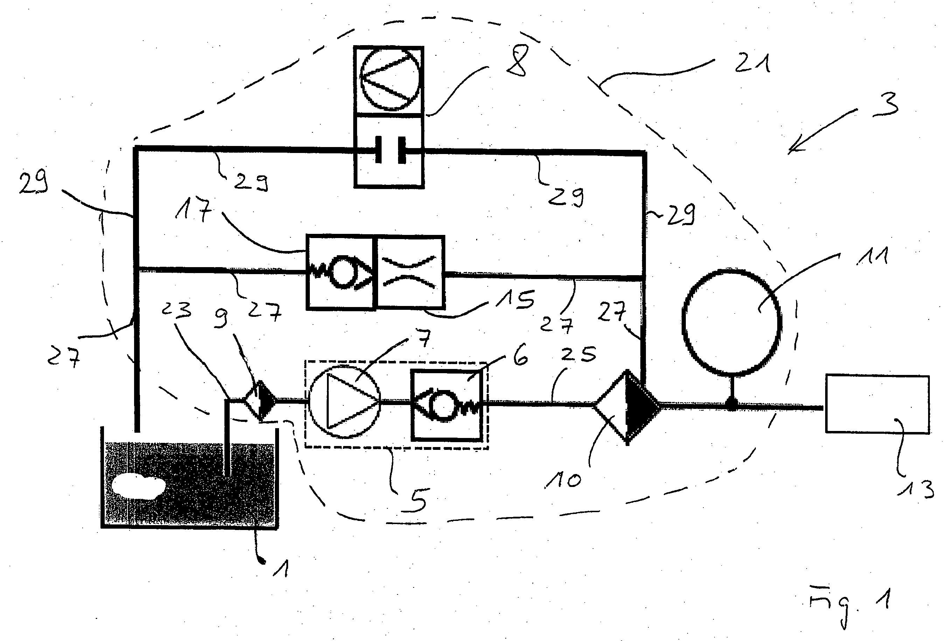

Figur 1 zeigt eine Dosieranordnung 3 für eine als Abgasnachbehandlungsmittel eingesetzte wässrige Harnstofflösung, welche in einem Vorratstank 1 bevorratet wird. Hierbei ist ein Fördermodul 21 vorgesehen, welches über eine Druckleitung 25 mit einem Dosiermodul 13 verbunden ist. Das Fördermodul 21 umfaßt eine Förderpumpeneinheit 5, innerhalb der druckseitig einer Förderpumpe 7 ein Rückschlagventil 6 folgt. Saugseitig ist die Förderpumpe 7 über eine Saugleitung 23 mit dem Vorratstank 1 verbunden, wobei zwischen Tank 1 und

Förderpumpeneinheit 5 ein Vorfilter 9 angeordnet ist. Die Druckleitung 25 verbindet einen druckseitigen Anschluß der Förderpumpeneinheit 5 über ein Hauptfilter 10 mit dem Dosiermodul 13. Im Bereich der Ausgangsseite des Hauptfilters 10 ist eine Rücklaufleitung 27 angeschlossen, welche zum Vorratstank 1 zurückführt und dort vorzugsweise oberhalb eines maximalen Füllstands des Tanks 1 endet. In der Rücklaufleitung 27 ist eine Reihenschaltung eines Rückschlagventils 17 mit einer Drossel 15 angeordnet. Das Rückschlagventil 17 ist auf der dem Tank zugewandten Seite der Rücklaufleitung angeordnet und kann zum Tank hin öffnen, und die Drossel 15 ist auf der dem Hauptfilter 10 zugewandten Seite der Rücklaufleitung angeordnet. Alternativ kann auch eine umgekehrte Reihenfolge von Drossel und Rückschlagventil vorgesehen sein. Drossel 15 und Rückschlagventil 17 sind als integriertes Bauteil ausgebildet. Das Fördermodul 21 weist neben der Förderpumpe 7 eine bedarfsweise schaltbare Rücksaugpumpe 8 auf, welche über eine Rücksaugleitung 29 eingangsseitig über die Rücklaufleitung 27 mit der Druckleitung 25 verbunden ist. Ausgangsseitig der Rücksaugpumpe 8 führt die Rücksaugleitung 29 über die dem Tank zugewandte Seite der Rücklaufleitung 27 zurück zum Tank. An die Druckleitung 25 ist in einem Bereich zwischen dem Hauptfilter 10 und dem Dosiermodul 13 ein Drucksensor 11 angeschlossen.

Es liegt eine Parallelschaltung der Rücksaugpumpe 8 mit einer Reihenschaltung des Rückschlagventils 17 mit der Drossel 15 vor. Zum einen wird über die Förderpumpeneinheit im Dosierbetrieb das flüssige Abgasnachbehandlungsmittel aus dem Tank angesaugt und über das Dosiermodul 13, welches als schaltbares Ventil ausgestaltet sein kann, stromaufwärts insbesondere eines Katalysators zur selektiven katalytischen Reduktion dosiert in den Abgastrakt eingespritzt. Überschüssiges Abgasnachbehandlungsmittel fließt über die Rücklaufleitung 27 zurück in den Tank. Zum anderen wird nach Abstellen der Brennkraftmaschine zu Zwecken des Gefrier- bzw. Korrosionsschutzes das Leitungssytem leergesaugt. Hierzu wird das insbesondere elektrisch ansteuerbare Dosiermodul geöffnet und die Rücksaugpumpe 8 eingeschaltet, so dass über die Rücksaugpumpe 8 insbesondere das Dosiermodul und auch die ansonsten fluidführenden Leitungen entleert werden und das betreffende Abgasnachbehandlungmittel unter Nutzung der Rücklaufleitung 27 insbesondere auf der dem Tank zugewandten Seite der Rücklaufleitung wieder dem Tank 1 zugeführt wird.

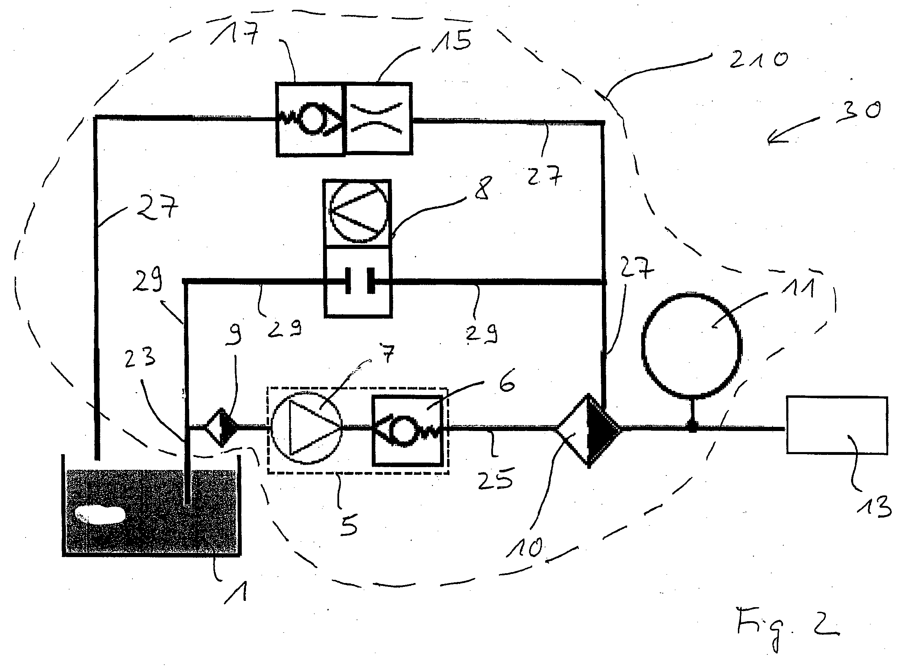

In Figur 2 eine alternative Dosieranordnung 30 mit einem alternativen Fördermodul 210 dargestellt. Gleiche oder ähnliche Bestandteile sind mit gleichen Bezugszeichen versehen und werden nicht nochmals beschrieben. Im Unterschied zur Anordnung nach Figur 1 ist die Ausgangsseite der Rücksaugpumpe 8 über die Rücksaugleitung 29 nicht mit der dem Tank zugewandten Seite der Rücklaufleitung 27, sondern mit der Saugleitung 23 verbunden. Dabei mündet die Rücksaugleitung 29 zwischen dem in den Tank hineinragenden Ende der Saugleitung 23 und dem Vorfilter 9 in die Saugleitung ein.

Im Unterschied zur zuerst beschriebenen Dosieranordnung entleert im vorliegenden Fall die Rücksaugpumpe die Anordnung über die in den Tank hineinragende Seite der Saugleitung 23. Der Vorteil dieser Anordnung besteht darin, die Leitungsteile mit direktem Kontakt zum Tankvolumen entleeren zu können.

## Patentansprüche

1. Dosieranordnung (3, 30) für ein flüssiges Abgasnachbehandlungsmittel zur Nachbehandlung des Abgases einer eine Abgasanlage aufweisenden Brennkraftmaschine, insbesondere für eine Harnstoff-Wasser-Lösung, aufweisend eine Förderpumpe (7) und ein Dosiermodul (13), wobei die Förderpumpe (7) mit einer Saugleitung (23) verbunden ist zum Ansaugen des Abgasnachbehandlungsmittels aus einem Tank (1), wobei die Förderpumpe (7) und das Dosiermodul (13) über eine Druckleitung (25) miteinander verbunden sind und das Abgasnachbehandlungsmittel über das Dosiermodul (13) der Abgasanlage zuführbar ist, wobei eine saugseitig mit dem Dosiermodul (13) verbundene Rücksaugpumpe (8) vorgesehen ist und wobei von der Rücksaugpumpe (8) gefördertes Abgasnachbehandlungsmittel druckseitig über eine von der Saugleitung (23) verschiedene Leitung zum Tank zurückführbar ist, **dadurch gekennzeichnet, dass** die Rücksaugpumpe als Membranpumpe mit einem sich drehenden Betätigungselement ausgebildet ist, wobei die Druckleitung (25) zwischen der Förderpumpe (7) und dem Dosiermodul (13) mit einer in den Tank mündenden Rücklaufleitung (27) verbunden ist, und wobei die Rücklaufleitung (27) eine Drossel (15) und/oder ein zum Tank (1) hin öffnendes Rückschlagventil (17) aufweist und wobei die von der Saugleitung (23) verschiedene Leitung die Rücklaufleitung (27) ist.

2. Dosieranordnung nach nach Anspruch 1, **dadurch gekennzeichnet, dass** die Rücksaugpumpe (8) druckseitig mit der Saugleitung (23) verbunden ist.

3. Dosieranordnung nach einem der vorhergehenden Ansprüche, **dadurch gekennzeichnet, dass** die Druckleitung (25) vor dem Dosiermodul (13) mit einem Drucksensor (11) verbunden ist.

4. Dosieranordnung nach einem der vorhergehenden Ansprüche, **dadurch gekennzeichnet, dass** zwischen der Förderpumpe (7) und dem Dosiermodul (13) ein Filter (10) angeordnet ist.

5. Dosieranordnung nach einem der vorhergehenden Ansprüche, **dadurch gekennzeichnet, dass** zwischen der Förderpumpe (7) und dem Dosiermodul (13) ein Rückschlagventil (6) angeordnet ist.

6. Dosieranordnung nach einem der vorhergehenden Ansprüche, **dadurch gekennzeichnet, dass** in der Saugleitung (23) ein Vorfilter (9) angeordnet ist.

7. Dosieranordnung nach einem der vorhergehenden Ansprüche, **dadurch gekennzeichnet, dass** die Förderpumpe (7) als Membranpumpe, insbesondere als Membranpumpe mit einem sich drehenden Betätigungselement, ausgebildet ist.

8. Verfahren zum Dosieren eines flüssigen Abgasnachbehandlungsmittels, insbesondere einer Harnstoff-Wasser-Lösung, zur Nachbehandlung des Abgases einer eine Abgasanlage aufweisenden Brennkraftmaschine mittels einer Dosieranordnung nach einem der vorhergehenden Ansprüche, bei dem mittels einer Förderpumpe (7) das Abgasnachbehandlungsmittel aus einem Tank (1) angesaugt und über ein Dosiermodul (13) der Abgasanlage zugeführt wird, **dadurch gekennzeichnet, dass** mittels einer Rücksaugpumpe (8) bedarfsweise, insbesondere nach Ausschalten der Brennkraftmaschine, Abgasnachbehandlungsmittel aus dem Dosiermodul (13) abgesaugt wird.

## Claims

1. Metering arrangement (3, 30) for a liquid exhaust-gas aftertreatment medium for the aftertreament of the exhaust gas of an internal combustion engine having an exhaust gas system, in particular for a urea/water solution, having a feed pump (7) and a metering module (13), wherein the feed pump (7) is connected to a suction line (23) for sucking the exhaust-gas aftertreatment medium out of a tank (1), wherein the feed pump (7) and the metering module (13) are connected to one another via a pressure line (25), and the exhaust-gas aftertreatment medium can be fed to the exhaust gas system via the metering module (13), wherein a recirculation pump (8), which is connected on the suction side to the metering module (13), is provided and wherein exhaust-gas aftertreatment medium, which is fed by the recirculation pump (8), can be recirculated on the pressure side to the tank via a line which is different from the suction line (23), **characterized in that** the recirculation pump is embodied as a diaphragm pump with a rotating activation element, wherein the pressure line (25) is connected, between the feed pump (7) and the metering module (13), to a return line (27) which opens into the tank, and wherein the return line (27) has a restrictor (15) and/or a nonreturn valve (17) which opens toward the tank (1) and wherein the line which is different from the suction line (23) is the return line (27).

2. Metering arrangement according to Claim 1, **characterized in that** the recirculation pump (8) is connected on the pressure side to the suction line (23).

3. Metering arrangement according to either of the preceding claims, **characterized in that** the pressure line (25) is connected to a pressure sensor (11) upstream of the metering module (13).

4. Metering arrangement according to one of the preceding claims, **characterized in that** a filter (10) is arranged between the feed pump (7) and the metering module (13).

5. Metering arrangement according to one of the preceding claims, **characterized in that** a nonreturn valve (6) is arranged between the feed pump (7) and the metering module (13).

6. Metering arrangement according to one of the preceding claims, **characterized in that** a prefilter (9) is arranged in the suction line (23).

7. Metering arrangement according to one of the preceding claims, **characterized in that** the feed pump (7) is embodied as a diaphragm pump, in particular as a diaphragm pump with a rotating activation element.

8. Method for metering a liquid exhaust-gas aftertreatment medium, in particular a urea/water solution, for the aftertreatment of the exhaust gas of an internal combustion engine having an exhaust gas system by means of a metering arrangement according to one of the preceding claims, in which the exhaust-gas aftertreatment medium is sucked out of a tank (1) by means of a feed pump (7) and is fed to the exhaust gas system via a metering module (13), **characterized in that** the exhaust-gas aftertreatment medium is sucked out of the metering module (13) by means of a recirculation pump (8) as required, in particular after the internal combustion engine has been switched off.

## Revendications

1. Ensemble de dosage (3, 30) d'un moyen liquide de post-traitement des gaz d'échappement en vue du post-traitement des gaz d'échappement d'un moteur à combustion interne qui présente une installation de gaz d'échappement, en particulier pour le dosage d'une solution aqueuse d'urée,
l'ensemble présentant une pompe de transport (7) et un module de dosage (13),
la pompe de transport (7) étant raccordée à un conduit d'aspiration (23) et étant prévue pour aspirer l'agent de post-traitement des gaz d'échappement dans une cuve (1),
la pompe de transport (7) et le module de dosage (13) étant raccordés mutuellement par un conduit sous pression (25) et l'agent de post-traitement des gaz d'échappement pouvant être amené à l'installation de gaz d'échappement par l'intermédiaire du module de dosage (13),
une pompe de ré-aspiration (8) étant raccordée au côté aspiration du module de dosage (13) et de l'agent de post-traitement des gaz d'échappement transporté par la pompe de ré-aspiration (8) pouvant être amené du côté refoulement à la cuve par l'intermédiaire d'un conduit différent du conduit d'aspiration (23), **caractérisé en ce que**
la pompe de ré-aspiration est configurée comme pompe à membrane dotée d'un élément d'actionnement rotatif,
**en ce qu'**entre la pompe de transport (7) et le module de dosage (13), le conduit sous pression (25) est raccordé à un conduit de renvoi (27) qui débouche dans la cuve,
**en ce que** le conduit de renvoi (27) présente un étranglement (15) et/ou une soupape anti-retour (17) ouverte en direction de la cuve (1) et
**en ce que** le conduit différent du conduit d'aspiration (23) est le conduit de renvoi (27).

2. Ensemble de dosage selon la revendication 1, **caractérisé en ce que** la pompe de ré-aspiration (8) est raccordée côté refoulement au conduit d'aspiration (23).

3. Ensemble de dosage selon l'une des revendications précédentes, **caractérisé en ce que** le conduit sous pression (25) est raccordé à un capteur de pression (11) situé en amont du module de dosage (13).

4. Ensemble de dosage selon l'une des revendications précédentes, **caractérisé en ce qu'**un filtre (10) est disposée entre la pompe de transport (7) et le module de dosage (13).

5. Ensemble de dosage selon l'une des revendications précédentes, **caractérisé en ce qu'**une soupape anti-retour (6) est disposée entre la pompe de transport (7) et le module de dosage (13).

6. Ensemble de dosage selon l'une des revendications précédentes, **caractérisé en ce qu'**un pré-filtre (9) est disposé dans le conduit d'aspiration (23).

7. Ensemble de dosage selon l'une des revendications précédentes, **caractérisé en ce que** la pompe de transport (7) est configurée comme pompe à membrane, en particulier comme pompe à membrane à élément d'actionnement rotatif.

8. Procédé de dosage d'un agent liquide de post-traitement des gaz d'échappement, en particulier d'une solution aqueuse d'urée, en vue du post-traitement des gaz d'échappement d'un moteur à combustion interne présentant une installation de gaz d'échappement, au moyen d'un ensemble de dosage selon l'une des revendications précédentes, et dans lequel l'agent du post-traitement des gaz d'échappement est aspiré dans une cuve (1) au moyen d'une pompe de transport (7) et est amené à l'installation de gaz d'échappement par l'intermédiaire d'un module de dosage (13),
**caractérisé en ce que**
en cas de besoin, en particulier après le débranchement du moteur à combustion interne, l'agent de post-traitement des gaz d'échappement est aspiré du module de dosage (13) au moyen d'une pompe de ré-aspiration (8).
